# EUROPÄISCHE PATENTSCHRIFT

(11) **EP 0 585 595 B1**
(45) Veröffentlichungstag und Bekanntmachung des Hinweises auf die Patenterteilung: **14.10.1998**
(21) Anmeldenummer: 93111865.7
(22) Anmeldetag: 23.07.1993
(51) Int. Cl.: G06K 7/10

(54) **Verfahren und Einrichtung zum Lesen binärer Informationen**
Method and device for reading digital informations
Méthode et dispositif pour lire des informations binaires

(30) Priorität: 03.09.1992 DE 4229429
(43) Veröffentlichungstag der Anmeldung: 09.03.1994
(73) Patentinhaber: LRE Technology Partner GmbH, 80807 München (DE)
(72) Erfinder: Günnewig, Bernhard, D-85290 Geisenfeld (DE); Tempes, Simone Johanna, D-81371 München (DE)
(74) Vertreter: Schaumburg, Thoenes, Thurn Patentanwälte

(56) Entgegenhaltungen:
- US-A- 3 517 167
- US-A- 4 250 488
- US-A- 4 970 379
- ELEKTOR, Bd.7, Nr.5, Mai 1981, CANTERBURY Seiten 5-43 - 5-49 'reading bar codes'
- IBM TECHNICAL DISCLOSURE BULLETIN, Bd.15, Nr.1, Juni 1972 Seiten 276 - 277 R.J. BRAUN AND L.F. ZAMAN 'automatic light intensity control for optical sensing'

## Beschreibung

Die Erfindung betrifft ein Verfahren zum Lesen binärer Informationen, die in Form optisch abtastbarer Felder auf einem Datenträger nach einem vorgegebenen Zeichencode gespeichert sind, bei dem eine Relativbewegung zwischen dem Datenträger und einem optisch-elektrischen Wandler erzeugt wird, der die von einer Strahlungsquelle beleuchteten Felder abtastet, wobei abhängig von der erfaßten Strahlung ein elektrisches Signal erzeugt wird, aus dem die binären Informationen gewonnen werden. Ferner betrifft die Erfindung eine Einrichtung zum Lesen binärer Informationen.

Bei einem bekannten Verfahren sind auf einer Codekarte Daten gespeichert, die von einem Codeleser gelesen werden. Als Zeichencode wird häufig der bekannte Barcode verwendet, bei dem zur Informationscodierung die Breite der hellen und dunklen Felder auf dem Träger verändert wird. Um auch bei geringem Umgebungslicht die hellen und dunklen Felder eindeutig voneinander unterscheiden zu können, wird der Datenträger mit den abzutastenden Feldern mit Strahlung konstanter Stärke beleuchtet. Eine andere Möglichkeit besteht darin, den Datenträger mit Strahlungsimpulsen einer bestimmten Frequenz zu beleuchten und das zu dieser Strahlung gehörende, vom optisch-elektrischen Wandler erzeugte Signal auszufiltern und weiterzuverarbeiten. Dadurch wird der Einfluß des Umgebungslichtes auf das Ergebnis der Informationsgewinnung unterdrückt.

Bei den beiden vorgenannten Möglichkeiten der Beleuchtung ist die der Strahlungsquelle zuzuführende Energie unabhängig vom Informationsinhalt der Felder und vom Umgebungslicht. Die in Form von Strahlung abzugebende Energie muß daher auf den ungünstigsten Betriebsfall, z.B. Dunkelheit, ausgelegt werden. Der Energieverbrauch einer Einrichtung, mit der ein solches Verfahren durchgeführt wird, wird im wesentlichen von dieser abzugebenden Strahlungsenergie bestimmt und ist daher hoch. Batteriebetriebene Einrichtungen haben demzufolge eine geringe Einsatzdauer und erfordern ein häufiges Austauschen der Batterie oder ein häufiges Aufladen des Akkus.

Es ist Aufgabe der Erfindung, ein Verfahren und eine Einrichtung zum Lesen binärer Informationen anzugeben, bei dem bzw. bei der die der Strahlungsquelle zuzuführende Energie verringert ist.

Diese Aufgabe wird für ein Verfahren eingangs genannter Art dadurch gelöst, daß die von der Strahlungsquelle abgegebene Strahlung fortlaufend so geregelt wird, daß die vom optisch-elektrischen Wandler erfaßte Strahlung auf einem vorgegebenen Strahlungswert annähernd konstant gehalten wird, und daß das elektrische Signal dem Signalfluß des Regelkreises entnommen wird.

Die Erfindung geht von der Überlegung aus, daß bei einer Umgebungsstrahlung mit hohem Strahlungspegel, der ein ausreichendes Unterscheiden der Felder mit unterschiedlichem Informationsgehalt voneinander gestattet, die von der Strahlungsquelle auszusendende Strahlungsenergie verringert werden kann. Nur dann, wenn die Umgebungsstrahlung gering ist, wird es erforderlich, daß die Strahlungsquelle die Felder mit zusätzlicher Strahlungsenergie beleuchtet. Gemäß der Erfindung wird die von der Strahlungsquelle ausgesendete Strahlung so nachgeregelt, daß der Wandler eine konstante Strahlung erfaßt. Dies bedeutet, daß beim optischen Abtasten der Felder auf dem Datenträger die im allgemeinen vorhandene Umgebungsstrahlung mit ausgenutzt wird. Ein Variieren dieser Umgebungsstrahlung wird selbsttätig ausgeregelt.

Wenn z.B. als Zeichencode der Barcode mit abwechselnd hellen und dunklen Feldern verwendet wird, so ist beim Abtasten eines hellen Feldes nur eine geringe Strahlungsenergie erforderlich. Die der Strahlungsquelle zuzuführende elektrische Energie wird demzufolge beim Abtasten heller Felder verringert. Da beim Barcode die hellen und die dunklen Felder etwa gleich häufig auftreten, kann mit einer erheblichen Energieeinsparung gerechnet werden. Die Lebensdauer einer Batterie bzw. eines Akkumulators in einer Einrichtung zum Lesen der binären Informationen wird somit erhöht. Dieser Effekt der Energieeinsparung tritt auch bei Zeichencodes auf, die farbige Felder verwenden, bzw. bei Datenträgern, deren Felder im Auflichtbetrieb oder im Durchlichtbetrieb abgetastet werden.

Beim Abtasten unterschiedlich heller Felder ändert sich kurzzeitig die vom Wandler erfaßte Strahlung, was reglungstechnisch einer Beaufschlagung eines Regelkreises mit einer Störgröße entspricht. Beim Ausregeln dieser Störgröße, wobei die von der Strahlungsquelle abgegebene Strahlung durch den Regelkreis so eingestellt wird, daß die vom Wandler erfaßte Strahlung annähernd gleich dem vorgegebenen Strahlungswert ist, treten im Signalfluß des Regelkreises elektrische Signale auf, die diese Störgröße abbilden. Im Signalfluß des Regelkreises sind also auch die in den Feldern codierten Informationen enthalten. Daher wird gemäß der Erfindung das elektrische Signal, aus dem die binären Informationen gewonnen werden, dem Signalfluß des Regelkreises entnommen. Eine solche Entnahme kann an verschiedenen Stellen des Regelkreises erfolgen. Beispielsweise kann hierzu ein Steuersignal verwendet werden, mit dem die Strahlungsquelle gesteuert wird, oder das von einem Regler abgegebene Signal.

Bei einem bevorzugten Ausführungsbeispiel der Erfindung wird der Strahlungswert so eingestellt, daß er größer als die vom Wandler erfaßte, ausschließlich von der Umgebungsstrahlung herrührende Strahlung ist. Dadurch ist gewährleistet, daß der Regelkreis auch bei starkem Umgebungslicht die Strahlquelle so ansteuert, daß sie Strahlung abstrahlt, die sich zur Umgebungsstrahlung addiert und sich so dem vorgegebenen Strahlungswert annähert. Auf diese Weise wird die Regelgrenze des Regelkreises auch bei starkem Umgebungslicht nicht überschritten und die Gewinnung der binären Informationen aus dem elektrischen Signal ist in jedem Betriebszustand gesichert.

Ferner betrifft die Erfindung eine Einrichtung zum Lesen binärer Informationen, die auf einem Datenträger in Form von optisch abtastbaren Feldern gespeichert sind. Die Einrichtung hat eine elektrisch steuerbare Strahlungsquelle, die ein Feld beleuchtet, und einen optisch-elektrischen Wandler, der das beleuchtete Feld abtastet, wobei abhängig von der erfaßten Strahlung ein elektrisches Signal erzeugt wird, aus dem eine Auswerteeinheit die Informationen ermittelt. Diese Einrichtung ist dadurch gekennzeichnet, daß die Strahlungsquelle und der Wandler Teil eines Regelkreises sind, der die Strahlungsquelle so regelt, das die vom Wandler erfaßte Strahlung auf einem vorgegebenen Strahlungswert annähernd konstant gehalten ist, und daß die Auswertungseinheit das Signal dem Signalfluß des Regelkreises entnimmt.

Eine derartige Einrichtung kann zum Durchführen des vorgenannten Verfahrens verwendet werden.

Ein Ausführungsbeispiel der Einrichtung nach der Erfindung ist dadurch gekennzeichnet, daß der Erfassungsbereich des optisch-elektrischen Wandlers kleiner als das kleinste Feld ist und daß die Strahlungsquelle einen Bereich beleuchtet, der kleiner als dieses Feld, vorzugsweise gleich dem Erfassungsbereich des Wandlers ist. Die Begrenzung des Erfassungsbereichs des Wandlers bzw. des von der Strahlungsquelle beleuchteten Bereichs ist mit bekannten optischen Mitteln realisierbar, beispielsweise durch Linsen, Lichtleiter etc. Durch die vorgenannten Maßnahmen wird erreicht, daß die der Strahlungsquelle zuzuführende Energie noch weiter vermindert wird, denn durch die Konzentration der ausgesendeten Strahlung auf einen kleinen Bereich ergibt sich bereits bei einer geringen Strahlungsenergie eine hohe Strahldichte.

Ein Ausführungsbeispiel der Erfindung wird im folgenden anhand der Zeichnungen erläutert. Darin zeigt:
- Figur 1: eine Einrichtung zum Lesen binärer Informationen in einer Blockdarstellung, und
- Figur 2: eine Schaltungsanordnung zum Betreiben der Einrichtung.

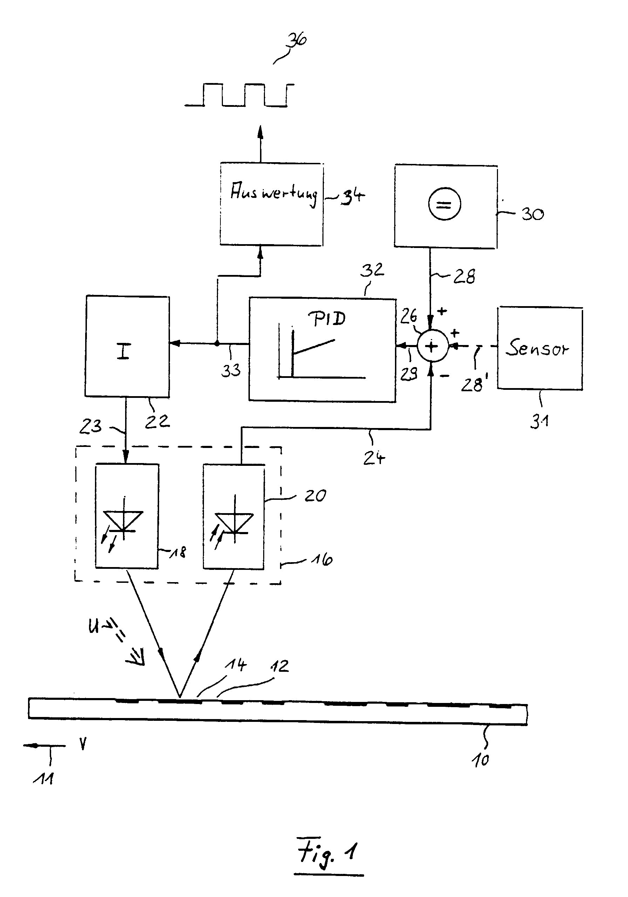

In Figur 1 ist in einem Blockschaltbild schematisch eine Einrichtung zum Lesen binärer Informationen dargestellt, die auf einer Codekarte 10 aufgezeichnet sind. Die in einem Balkencode (Barcode) umgesetzten Informationen sind in hellen und dunklen Feldern, beispielsweise in den Feldern 12, 14 aufgezeichnet, deren jeweilige Breite variiert. Die Codekarte 10 wird mit einer Geschwindigkeit v in Richtung des Pfeils 11 an einem Reflexsensor 16 vorbeigeführt, der eine Infrarotlicht emittierende Diode 18 und einen Strahlungsempfänger 20 enthält. Die Diode 18 wird durch eine spannungsgesteuerte Stromquelle 22 mit Strom versorgt. Sie sendet annähernd proportional zu diesem Strom Infrarotlicht aus, das das Feld 14 beleuchtet.

Der Strahlungsempfänger 20 hat einen Erfassungsbereich, der kleiner als das kleinste Feld ist. Er erfaßt die von diesem Erfassungsbereich ausgehende Strahlung. Der Strahlungsempfänger 20 wandelt die erfaßte Strahlung in ein elektrisches Signal 24 um, das einer Vergleichsstelle 26 zugeführt wird. Dieser Vergleichsstelle 26 wird auch das Sollwertsignal 28 eines Gleichspannungsgebers 30 zugeführt. Die Vergleichsstelle 26 ermittelt als Regelabweichung die Differenz der Signale 28 und 24 und führt sie einem Regler 32 zu, der ein Proportional-Integral-Differential-Verhalten (PID-Verhalten) hat. Ein Ausgangssignal 33 des Reglers 32 wird der Stromquelle 22 zugeführt, die abhängig von diesem Ausgangssignal 33 einen Strom erzeugt, der der Diode 18 zugeführt wird. Das Ausgangssignal 33 des Reglers 32 wird auch einer Auswertungseinheit 34 zugeführt, welche binäre Signale 36 erzeugt, die den auf der Codekarte 10 gespeicherten Informationen entsprechen.

Im folgenden wird die Funktionsweise der Einrichtung nach Figur 1 erläutert. In dem in Figur 1 dargestellten Betriebszustand erfaßt der Strahlungsempfänger 20 die vom dunklen Feld 14 reflektierte Strahlung, die sich aus Umgebungsstrahlung U und Strahlung der Diode 18 zusammensetzt. Es wird angenommen, daß der Regelkreis sich im ausgeregelten Zustand befindet, d.h. die Signale 24 und 28 sind gleich groß, so daß die Regelabweichung 29 gleich Null ist. Das Ausgangssignal 33 des Reglers 32 steuert die Stromquelle 22 so, daß die Diode 18 der Umgebungstrahlung U gerade so viel Strahlung hinzufügt, daß wie erwähnt die Regelabweichung 29 gleich Null ist.

Wenn bei der weiteren Bewegung der Codekarte 10 in Richtung des Pfeils 11 das nachfolgende helle Feld 12 abgetastet wird, so wird das Gleichgewicht des Regelkreises zunächst gestört. Das helle Feld 12 reflektiert die auf ihm einfallende Strahlung stärker als das dunkle Feld 14, so daß der Pegel des Signals 24 ansteigt. Die Regelabweichung 29 wird negativ und der Regler 32 verringert sein Ausgangssignal 33. Die Stromquelle 22 steuert daraufhin die Diode 18 mit einem geringerem Strom an, so daß deren Strahlung verringert ist und damit auch die vom Strahlungsempfänger 20 insgesamt erfaßte Strahlung. Dieser Ausgleichsvorgang dauert so lange an, bis die Regelabweichung 29 gleich Null ist, d.h. die vom Stahlungsempfänger 20 erfaßte Strahlung den gleichen Wert hat, wie beim Abtasten des dunklen Felds 14 im vorherigen Betriebszustand.

Wenn im Zuge der Weiterbewegung der Codekarte 10 der Strahlungsempfänger 20 ein dunkles Feld erfaßt, laufen umgekehrte Regelvorgänge ab. Das heißt, die Regelabweichung 29 wird zunächst positiv und der Regler 32 erhöht sein Ausgangssignal 33, so daß über die Stromquelle 22 die Diode 18 mehr Strahlung aussendet. Dieser Vorgang dauert an, bis die Regelabweichung 29 gleich Null ist. Die vom Strahlungsempfänger 20 insgesamt empfangene Strahlung hat dann wieder den gleichen Wert wie im vorherigen Zustand.

Die Auswerteeinheit 34 registriert die Änderungen im Ausgangssignal 33 und erzeugt aus diesen Änderungen das Binärsignal 36, in welchem die Informationen der Felder 12, 14 der Codekarte 10 abgebildet sind.

Das vom Spannungsgeber 30 abgegebene Sollwertsignal 28 wird so eingestellt, daß es in allen Betriebszuständen bei abgedunkelter Diode 18 größer ist als das Signal 24. Dadurch wird erreicht, daß in allen Betriebszuständen ein gewisser Strahlungsanteil an der vom Strahlungsempfänger 20 empfangenen Gesamtstrahlung von der Diode 18 geliefert werden muß, um die Regelabweichung 29 auf den Wert Null zu bringen. Der Regler 32 verläßt somit in keinem Betriebszustand seine Regelgrenzen, so daß die Auswerteeinheit 34 zuverlässig jede Änderung des Ausgangssignals 33 registrieren und das Binärsignal 36 erzeugen kann.

Wie in Fig. 1 durch eine gestrichelte Linie angedeutet, kann in die Vergleichsstelle 26 zusätzlich das Signal 28' eines Sensors 31, der ähnlich wie der Strahlungsempfänger 20 aufgebaut sein kann, eingespeist werden. Der Sensor 31 erzeugt eine dem Umgebungslicht proportionale Spannung. Diese Maßnahme hat den Vorteil, daß der Sollwert des Regelkreises jeweils an die herrschende Umgebungsstrahlung angepaßt ist. Bei völliger Dunkelheit, bei der das Signal 28' annähernd gleich Null ist, wird das Signal 28 des Gleichspannungsgebers so eingestellt, daß der Regelkreis zuverlässig arbeitet und die Auswertungseinheit 34 die binären Signale 36 sicher erzeugen kann. Bei starkem Umgebungslicht nimmt sowohl das Signal 24 als auch das Signal 28' zu, so daß in bezug auf das Regelverhalten des Regelkreises annähernd gleiche Verhältnisse wie bei Dunkelheit vorliegen, wenn die Ausgangssignale des Sensors 31 und des Strahlungsempfängers 20 einander etwa entsprechen. Die Stromquelle 22 gibt demgemäß in einem weiten Bereich der Intensität der Umgebungsstrahlung lediglich minimalen Strom ab, der ausreicht, um die Felder 12, 14 der Codekarte 10 sicher zu erkennen und einem Binärwert zuzuordnen. Dadurch wird der Stromverbrauch weiter reduziert.

Die vorgenannte Schaltungsmaßnahme zeigt auch günstiges Verhalten bei zeitlich schnell wechselndem Umgebungslicht, z.B. bei Licht von Neonröhren. Je nach Momentanwert der Intensität des Wechsel lichts steigen und fallen die Signale 24 und 28' an bzw. ab, so daß die Regelabweichung 29 nahezu über die Zeit gesehen konstant bleibt. Die Auswertung der binären Signale wird somit durch den Wechselanteil in der Umgebungsstrahlung nicht beeinflußt.

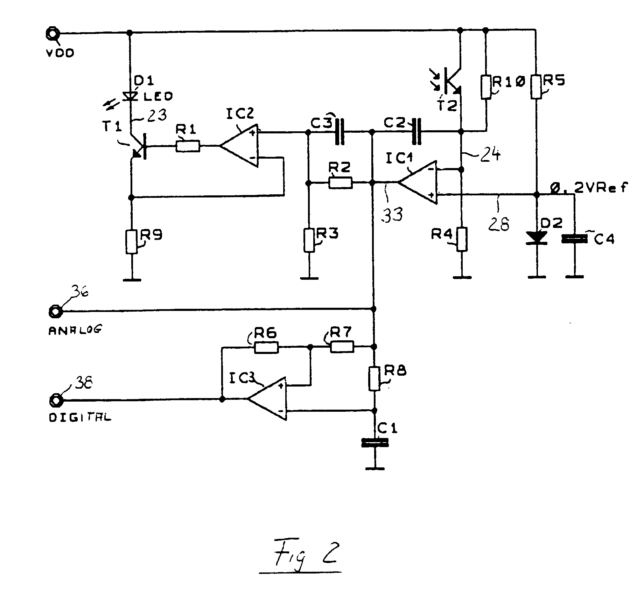

In Figur 2 ist eine aus einzelnen elektronischen Bauelementen aufgebaute Schaltungsanordnung dargestellt, mit der die Erfindung schaltungstechnisch realisiert werden kann. Signale, die denen im Blockschaltbild nach Figur 1 entsprechen, sind gleich bezeichnet. In der Schaltungsanordnung nach Figur 2 erzeugt eine Schottkydiode D2 eine konstante Spannung von 0,2 Volt. Der zur Diode D2 parallel geschaltete Kondensator C4 dient zur Glättung der Spannung und zur Rauschunterdrückung. Die Schottkydiode D2 wird über den Widerstand R5 aus einer Gleichspannungsversorgungsquelle VDD gespeist. Die Spannung der Schottkydiode D2, die dem Sollwertsignal 28 in Figur 1 entspricht, wird dem nicht invertierenden Eingang eines Operationsverstärkers IC1 zugeführt.

Ein als Strahlungsempfänger dienender Fototransistor T2 erzeugt über den in Serie geschalteten Widerstand R4 eine Spannung, welche dem invertierenden Eingang des Operationsverstärkers IC1 zugeführt ist. Der Operationsverstärker IC1 ist über einen Kondensator C2 rückgekoppelt, der zur Schwingungsunterdrückung dient. Der Operationsverstärker IC1 vergleicht die Signale 24 und 28 miteinander und erzeugt abhängig von diesem Vergleich an seinem Ausgang eine positive oder negative Spannung. Die Ausgangsspannung 33 des Operationsverstärkers IC1 wird einem aus den Widerständen R2 und R3 bestehenden Spannungsteiler zugeführt, dessen Mittelabgriff mit dem nicht invertierende Eingang eines Operationsverstärkers IC2 verbunden ist. Parallel zum Widerstand R2 ist ein Kondensator C3 geschaltet, der das Regelverhalten des gesamten Regelkreises im Sinne eines Differential-Gliedes beinflußt.

Der Ausgang des Operationsverstärkers IC2 ist über einen Widerstand R1 auf die Basis eines Transistors T1 geführt, dessen Emitteranschluß mit dem invertierenden Eingang des Operationsverstärkers IC2 verbunden und über einen Widerstand R9 gegen Masse geschaltet ist. Die Bauelemente IC2, R1, T1 und R9 bilden eine span, nungsgesteuerte Stromquelle 22 nach Figur 1. Der Kollektor des Transistors T1 ist mit der lichtemittierenden Diode D1 verbunden, deren Anode an die Versorgungsspannung VDD angeschlossen ist.

Das Ausgangssignal 33 kann über einen Analog-Anschluß 36 abgegriffen und in einer Signalerzeugungseinheit weiterverarbeitet werden. Ferner wird das Ausgangssignal 33 über ein RC-Glied, bestehend aus einem Widerstand R8 und einem Kondensator C1, gegen Masse geführt. Dieses RC-Glied dient als Differenzierglied und differenziert das Ausgangssignal 33. Die im Ausgangssignal 33 enthaltenen Signaländerungen werden durch das RC-Glied überhöht und können damit leichter ausgewertet werden. Die Spannung am Widerstand R8 wird einem als Komparator geschalteten Operationsverstärker IC3 zugeführt, dessen Hysterese über die Rückkopplungswiderstände R6 und R7 eingestellt wird. Der Ausgang des Operationsverstärkers IC3 wird einem Anschluß 38 zugeführt, an dem das Binärsignal abgegriffen werden kann, in dem die auf der Codekarte 10 gespeicherten Informationen enthalten sind.

Im folgenden wird die Betriebsweise der Schaltungsanordnung nach Figur 2 erläutert. Es wird zunächst angenommen, daß der Transistor T2 ein helles Feld der Codekarte abtastet und sich der Regelkreis in einem eingeschwungenen Zustand befindet. In diesem ist die Differenz zwischen den Spannungssignalen 24, 28 gleich Null und die Diode D1 sendet eine Strahlung vorgegebener Stärke aus. Wenn beim nächsten Abtastvorgang ein dunkles Feld abgetastet wird, so empfängt der Transistor T2 zunächst eine veringerte Strahlung, der Pegel des Signals 24 nimmt ab, so daß der nicht invertierende Eingang einen höheren Spannungspegel als der invertierende Eingang des Operationsverstärkers IC1 hat. Der Operationsverstärker IC1 erhöht daraufhin sein Ausgangssignal 33. Diese Änderung wird über den Spannungsteiler R2, R3 und dem Kondensator C3 dem Operationsverstärker IC2 mitgeteilt, der in die Basis des Transistors T1 einen höheren Strom als vorher einspeist. Der Transistor T1 erniedrigt daraufhin seinen Innenwiderstand, so daß durch die Diode D1 ein erhöhter Strom fließt, in dessen Folge die Diode D1 eine Strahlung größerer Stärke ausstrahlt. Dies hat zur Folge, daß dem Transistor T2 mehr Strahlung zugeführt wird, so daß sich der Pegel des Signals 24 erhöht. Dieser Ausgleichsvorgang dauert so lange an, bis die Spannungsdifferenz zwischen dem invertierenden und dem nicht invertierenden Eingang des Operationsverstärkers IC1 gleich Null ist.

Wenn im nächsten Betriebszustand vom Transistor T2 ein helles Feld erfaßt wird, so wird der durch die Diode D1 fließende Strom so lange heruntergeregelt, bis die vom Transistor T2 erfaßte Strahlung einen Wert hat, dessen in das Spannungssignal 24 gewandelte Spannung gleich der Spannung 28 der Schottkydiode D2 ist.

Die während des Ausgleichsvorgangs im Regelkreis vom Operationsverstärker IC1 erzeugten Änderungen der Ausgangsspannung 33 werden differenziert und über den Operationsverstärker IC3 in Binärsignale umgesetzt. Der Operationsverstärker IC3 arbeitet als Komparator mit schwimmender Schaltschwelle und unterdrückt den Gleichanteil in dem im Ausgangssignal 33 enthaltenen Gemisch aus Gleich- und Wechselanteilen. Die Widerstände R6 und R7 dienen zum Unterdrücken von Hystereseschwingungen.

Wenn während des Betriebs die Umgebungsstrahlung zunimmt, so bewirkt der Regelkreis eine Verringerung des Stromes durch die Diode D1. Dadurch wird der Gleichspannungsquelle VDD weniger Strom entnommen und die Batterie der Einrichtung geschont.

## Patentansprüche

1. Verfahren zum Lesen binärer Informationen, die in Form optisch abtastbarer Felder (12, 14) auf einem Datenträger (10) nach einem vorgegebenen Zeichencode gespeichert sind, bei dem eine Relativbewegung zwischen dem Datenträger (10) und einem optisch-elektrischen Wandler (20) erzeugt wird, der die von einer Strahlungsquelle (18) beleuchteten Felder (12, 14) abtastet, wobei abhängig von der erfaßten Strahlung ein elektrisches Signal (33) erzeugt wird, aus dem die binären Informationen gewonnen werden, dadurch **gekennzeichnet**, daß die von der Strahlungsquelle (18) abgegebene Strahlung fortlaufend so geregelt wird, daß die vom Wandler (20) erfaßte Strahlung auf einem vorgegebenen Strahlungswert annähernd konstant gehalten wird, und daß das elektrische Signal (33) dem Signalfluß des Regelkreises entnommen wird.

2. Verfahren nach Anspruch 1, dadurch **gekennzeichnet**, daß der Strahlungswert so eingestellt wird, daß er größer als die vom Wandler (20) erfaßte, ausschließlich von der Umgebungsstrahlung (U) herrührende Strahlung ist.

3. Verfahren nach Anspruch 1 oder 2, dadurch **gekennzeichnet**, daß zum Regeln der abgegebenen Strahlung als Istwert das vom Wandler (20) erzeugte elektrische Signal (24) und als Sollwert der erfaßten Strahlung ein einstellbarer Spannungswert (28) verwendet wird.

4. Verfahren nach einem der vorhergehenden Ansprüche, dadurch **gekennzeichnet,** daß die Informationen in Form von abwechselnd hellen und dunklen Feldern (12, 14) auf dem Datenträger (10) gespeichert ist.

5. Verfahren nach Anspruch 4, dadurch **gekennzeichnet**, daß das Abtasten der Felder (12, 14) im Durchlichtbetrieb erfolgt.

6. Verfahren nach Anspruch 4, dadurch **gekennzeichnet**, daß das Abtasten der Felder (12, 14) im Auflichtbetrieb erfolgt.

7. Einrichtung zum Lesen binärer Informationen, die auf einem Datenträger (10) in Form von optisch abtastbaren Feldern (12, 14) gespeichert sind, mit einer elektrisch steuerbaren Strahlungsquelle (18), die ein Feld beleuchtet (12, 14), und mit einem optisch-elektrischen Wandler (20), der das beleuchtete Feld (12, 14) abtastet, wobei abhängig von der erfaßten Strahlung ein elektrisches Signal (33), erzeugt wird, aus dem eine Auswertungseinheit (34) die Informationen ermittelt, dadurch **gekennzeichnet,** daß die Strahlungsquelle (18) und der Wandler (20) Teil eines Regelkreises sind, der die Strahlungsquelle (18) so regelt, daß die vom Wandler (20) erfaßte Strahlung auf einem vorgegebenen Strahlungswert annähernd konstant gehalten ist, und daß die Auswertungseinheit (34) das Signal (33) dem Signalfluß des Regelkreises entnimmt.

8. Einrichtung nach Anspruch 7, dadurch **gekennzeichnet**, daß ein Spannungsgeber (30, 31) vorgesehen ist, der eine Spannung (28, 28') erzeugt, die mit einem vom Wandler (20) erzeugten elektrischen Signal (24) in einem Regler (32) verglichen wird, welcher abhängig vom Vergleichs- ergebnis ein Regelsignal (33) erzeugt, das einer spannungsgesteuerten Stromquelle (22) zugeführt ist, die die Strahlungsquelle (18) mit Strom speist.

9. Einrichtung nach Anspruch 8, dadurch **gekennzeichnet**, daß der Spannungsgeber (30) eine konstante Gleichspannung (28) erzeugt.

10. Einrichtung nach Anspruch 8 oder 9, dadurch **gekennzeichnet**, daß als Spannungsgeber zusätzlich ein Sensor (31) vorgesehen ist, der eine der Umgebungsstrahlung proportionale Spannung (28') erzeugt.

11. Einrichtung nach einem der Ansprüche 8 bis 10, dadurch **gekennzeichnet**, daß der Auswertungseinheit (34) das Regelsignal (33) zugeführt ist.

12. Einrichtung nach einem der Ansprüche 7 bis 11, dadurch **gekennzeichnet**, daß der Erfassungsbereich des optisch-elektrischen Wandlers (20) kleiner als das Kleinste Feld (12, 14) ist.

13. Einrichtung nach einem der Ansprüche 7 bis 12, dadurch **gekennzeichnet**, daß die Strahlungsquelle (18) einen Bereich beleuchtet, der kleiner als das Kleinste Feld (12, 14) ist.

14. Einrichtung nach Anspruch 13, dadurch **gekennzeichnet**, daß der Bereich gleich dem Erfassungsbereich des Wandlers (20) ist.

15. Einrichtung nach einem der Ansprüche 7 bis 14, dadurch **gekennzeichnet**, daß als Strahlungsquelle eine Infrarotlicht emittierende Diode (18, D1) vorgesehen ist.

16. Einrichtung nach einem der Ansprüche 7 bis 15, dadurch **gekennzeichnet**, daß die Strahlungsquelle (18) und der optisch-elektrische Wandler (20) einen Reflexsensor (16) bilden.

## Claims

1. A method of reading binary data stored in the form of optically scannable fields (12, 14) on a data support (10) in accordance with a predetermined character code, a relative movement being produced between the data support (10) and an opto-electric transducer (20) which scans the fields (12, 14) illuminated by a radiation source (18), an electrical signal (33) being generated in dependence on the detected radiation and the binary data being obtained from said signal, characterised in that the radiation delivered by the radiation source (18) is continuously so controlled that the radiation detected by the transducer (20) is kept substantially constant at a predetermined radiation value, and in that the electric signal (33) is taken from the control circuit signal flow.

2. A method according to claim 1, characterised in that the radiation value is so adjusted that it is greater than the radiation detected by the transducer (20) and originating solely from the ambient radiation (U).

3. A method according to claim 1 or 2, characterised in that for the purpose of controlling the delivered radiation the electric signal (24) generated by the transducer (20) is used as the actual-value and an adjustable voltage value (28) is used as the set-value of the detected radiation.

4. A method according to any one of the preceding claims, characterised in that the data are stored in the form of alternately light and dark fields (12, 14) on the data support (10).

5. A method according to claim 4, characterised in that the scanning of the fields (12, 14) is effected by transmitted light.

6. A method according to claim 4, characterised in that the scanning of the fields (12, 14) is effected by incident light.

7. Apparatus for reading binary data stored in the form of optically scannable fields (12, 14) on a data support (10), comprising an electrically controllable radiation source (18) which illuminates a field (12, 14), and comprising an opto-electric transducer (20) which scans the illuminated field (12, 14), an electric signal (33) from which an evaluation unit (34) determines the data being generated in dependence on the detected radiation, characterised in that the radiation source (18) and the transducer (20) form part of a control circuit which so controls the radiation source (18) that the radiation detected by the transducer (20) is kept approximately constant at a predetermined radiation value, and in that the evaluation unit (34) takes the signal (33) from the control circuit signal flow.

8. Apparatus according to claim 7, characterised in that a voltage generator (30, 31) is provided which generates a voltage (28, 28') which is compared with an electric signal (24) generated by the transducer (20), in a controller (32) which in dependence on the result of the comparison generates a control signal (33) fed to a voltage-controlled current source (22) which supplies current to the radiation source (18).

9. Apparatus according to claim 8, characterised in that the voltage generator (30) generates a constant DC voltage (28).

10. Apparatus according to claim 8 or 9, characterised in that a sensor (31) is additionally provided as voltage generator and generates a voltage (28') proportional to the ambient radiation.

11. Apparatus according to any one of claims 8 to 10, characterised in that the control signal (33) is fed to the evaluation unit (34).

12. Apparatus according to any one of claims 7 to 11, characterised in that the range of detection of the opto-electric transducer (20) is smaller than the smallest field (12, 14).

13. Apparatus according to any one of claims 7 to 12, characterised in that the radiation source (18) illuminates a zone smaller than the smallest field (12, 14).

14. Apparatus according to claim 13, characterised in that the zone is equal to the range of detection of the transducer (20).

15. Apparatus according to any one of claims 7 to 14, characterised in that the radiation source provided is an infra-red light-emitting diode (18, D1).

16. Apparatus according to any one of claims 7 to 15, characterised in that the radiation source (18) and the opto-electric transducer (20) form a reflex sensor (16).

## Revendications

1. Méthode pour lire des informations binaires, qui sont stockées sous forme de champs (12, 14) pouvant être balayés de façon optique sur un support de données (10) selon un code de caractères prédéfini, avec laquelle on génère un mouvement relatif entre le support de données (10) et un convertisseur optique-électrique (20), qui balaie les champs (12, 14) éclairés par une source de rayonnement (18), un signal électrique (33) étant généré en fonction du rayonnement enregistré, signal à partir duquel sont obtenues les informations binaires, caractérisée en ce que le rayonnement émis par la source de rayonnement (18) est régulé en permanence de manière à ce que le rayonnement enregistré par le convertisseur (20) soit maintenu à peu près constant à une valeur de rayonnement prédéfinie, et en ce que le signal électrique (33) est prélevé sur le flux de signal du circuit régulateur.

2. Méthode selon la revendication 1, caractérisée en ce que la valeur de rayonnement est ajustée de façon à être supérieure au rayonnement enregistré par le convertisseur (20) et provenant exclusivement du rayonnement environnant (U).

3. Méthode selon la revendication 1 ou 2, caractérisée en ce que le signal électrique (24) généré par le convertisseur (20) est utilisé pour le réglage du rayonnement émis comme valeur réelle et une valeur de tension (28) réglable est utilisée comme valeur de consigne du rayonnement enregistré.

4. Méthode selon l'une des revendications précédentes, caractérisée en ce que les informations sont stockées sur le support de données (10) sous la forme de champs (12, 14) en alternance clairs et sombres.

5. Méthode selon la revendication 4, caractérisée en ce que le balayage des champs (12, 14) s'effectue en mode de lumière transmise.

6. Méthode selon la revendication 4, caractérisée en ce que le balayage des champs (12, 14) s'effectue en mode de lumière réfléchie.

7. Dispositif pour lire des informations binaires qui sont stockées sur un support de données (10) sous la forme de champs (12, 14) pouvant être balayés de façon optique, comportant une source de rayonnement (18) à commande électrique, qui éclaire (12, 14) un champ, et un convertisseur (20) optique-électrique, qui balaie le champ (12, 14) éclairé, un signal électrique (33) étant généré en fonction du rayonnement enregistré, signal à partir duquel une unité d'analyse (34) détermine les informations, caractérisé en ce la source de rayonnement (18) et le convertisseur (20) font partie d'un circuit régulateur, qui régule la source de rayonnement (18) de manière à ce que le rayonnement enregistré par le convertisseur (20) soit maintenu à peu près constant à une valeur de rayonnement prédéfinie, et en ce que l'unité d'analyse (34) prélève le signal (33) sur le flux de signaux du circuit régulateur.

8. Dispositif selon la revendication 7, caractérisé en ce qu'il est prévu un générateur de tension (30, 31), qui génère une tension (28, 28') qui est comparée avec un signal électrique (24) généré par le convertisseur (20) dans un régulateur (32), lequel génère, en fonction du résultat de la comparaison, un signal de réglage (33) qui est amené à une source de courant (22) commandée par tension, qui alimente en courant la source de rayonnement (18).

9. Dispositif selon la revendication 8, caractérisé en ce que le générateur de tension (30) génère une tension continue (28) contante.

10. Dispositif selon la revendication 8 ou 9, caractérisé en ce qu'il est prévu, comme générateur de tension, en plus un capteur (31) qui génère une tension (28') proportionnelle au rayonnement environnant.

11. Dispositif selon l'une des revendications 8 à 10, caractérisé en ce que le signal de réglage (33) est amené à l'unité d'analyse (34).

12. Dispositif selon l'une des revendications 7 à 11, caractérisé en ce que le secteur d'enregistrement du convertisseur optique-électrique (20) est plus petit que le plus petit champ (12, 14).

13. Dispositif selon l'une des revendications 7 à 12, caractérisé en ce que la source de rayonnement (18) éclaire un secteur qui est plus petit que le plus petit champ (12, 14).

14. Dispositif selon la revendication 13, caractérisé en ce que le secteur est égal au secteur d'enregistrement du convertisseur (20).

15. Dispositif selon l'une des revendications 7 à 14, caractérisé en ce qu'il est prévu comme source de rayonnement une diode (18, D1) émettant de la lumière infrarouge.

16. Dispositif selon l'une des revendications 7 à 15, caractérisé en ce que la source de rayonnement (18) et le convertisseur optique-électrique (20) forment un capteur réflexe (16).
